# EUROPEAN PATENT SPECIFICATION

(11) **EP 3 390 131 B1**
(45) Date of publication and mention of the grant of the patent: **05.05.2021**
(21) Application number: 16816239.4
(22) Date of filing: 12.12.2016
(51) Int. Cl.: B60K 28/06, G05D 1/02, B60W 40/08

(54) **METHOD FOR OPERATING A MOTOR VEHICLE WITH A STATE MONITORING DEVICE, DRIVER ASSISTANCE SYSTEM AND MOTOR VEHICLE**
VERFAHREN ZUM BETREIBEN EINES KRAFTFAHRZEUGS MIT EINER ZUSTANDSÜBERWACHUNGSVORRICHTUNG, FAHRERASSISTENZSYSTEM UND KRAFTFAHRZEUG
PROCÉDÉ PERMETTANT DE FAIRE FONCTIONNER UN VÉHICULE AUTOMOBILE AVEC UN DISPOSITIF DE SURVEILLANCE D'ÉTAT, SYSTÈME D'ASSISTANCE AU CONDUCTEUR ET VÉHICULE AUTOMOBILE

(30) Priority: 18.12.2015 DE 102015122245
(43) Date of publication of application: 24.10.2018
(73) Proprietor: Valeo Schalter und Sensoren GmbH, 74321 Bietigheim-Bissingen (DE)
(72) Inventor: MARQUETTE, Felix, 93012 Bobigny (FR); MAROUDIS, Pantelis, 93012 Bobigny (FR)
(74) Representative: Claassen, Maarten Pieter
(86) International application number: PCT/EP2016/080555
(87) International publication number: WO 2017/102614

(56) References cited:
- DE-A1-102012 014 717
- DE-A1-102013 012 750
- DE-A1-102014 204 339
- JP-A- 2008 120 271

## Description

The invention relates to a method for operating a motor vehicle. A state describing a degree of fatigue of a driver of the motor vehicle is determined by means of a state monitoring device. The invention also relates to a driver assistance system for a motor vehicle as well as to a motor vehicle with a driver assistance system.

Methods for operating a motor vehicle, in which a state describing a degree of fatigue of a driver of the motor vehicle is determined by means of a state monitoring device, are known from the prior art. Thus, it is for example known that a pupil movement of the driver of the motor vehicle is captured by a camera of the motor vehicle and the degree of fatigue of the driver is inferred based on the pupil movement. Thus, a warning notice is for example then output to the driver, which makes him aware of the present degree of fatigue and for example proposes to drive to a rest area and to have a break

DE102013012750A1 discloses a method for providing a rest mode in an autonomous vehicle.

It is the object of the invention to provide a method, a driver assistance system as well as a motor vehicle, by which or in which the determination of a state describing a degree of fatigue of a driver of a motor vehicle can be used to more safely operate the motor vehicle.

According to the invention, this object is solved by a method, by a driver assistance system as well as by a motor vehicle having the features according to the respective independent claims.

In a method according to the invention, a motor vehicle is operated. A state describing a degree of fatigue of a driver of the motor vehicle is determined by means of a state monitoring device. An essential idea of the invention is to be regarded in that a motor vehicle component of the motor vehicle can be operated in a normal mode and in a rest mode different therefrom depending on the degree of fatigue. In the rest mode, a parameter characterizing the function of the motor vehicle component is varied with respect to the function perception sensed by the driver in particular towards a value supporting a rest state of the driver.

By the presence of the rest mode different from the normal mode, the motor vehicle can be more safely operated.

Thus, it is provided that the state describing the degree of fatigue is in particular continuously determined during the operation of the motor vehicle by means of the state monitoring device. The state monitoring device can for example be a constituent of the motor vehicle and/or be formed as a unit external to motor vehicle, which is for example wirelessly coupled to the motor vehicle. For example, multiple units for monitoring the state can also be encompassed by the state monitoring device. Thus, the state of the driver can be more variously and reliably determined.

Depending on the degree of fatigue, the function of the motor vehicle component can be varied. It is the aim that the function of the motor vehicle component in the rest mode is present such that the driver senses the function as pleasant if he is in a rest state or wants to fall asleep or sleeps. By varying the function of the motor vehicle component, the rest state or the sleep of the driver is to be assisted. Thus, the motor vehicle component can for example be formed as an interior lighting, which is dimmed or turned off in the rest mode. The aim of the rest mode is therefore in general that an operating mode of the motor vehicle is to be provided, in which the motor vehicle is to be operated in a manner assisting for a sleep phase of the driver and in a pleasant manner. Thereby, the driver can more comfortably and restfully rest and sleep, respectively, and also more safely operate the motor vehicle for example after terminated rest phase since the rest phase has more intensively and restfully proceeded by the rest mode of the motor vehicle.

The rest mode can be proposed to the driver if the degree of fatigue exceeds a fatigue limit value. If the proposal is then accepted by the driver, the motor vehicle changes into the rest mode, in particular after a predetermined maximum period of time. Additionally, the rest mode can also be manually activated by the driver. Thus, it is for example not required that the degree of fatigue is larger than the fatigue limit value to activate the rest mode. The driver can for example activate the rest mode via an operating element of the motor vehicle if he wants to rest or sleep.

It is provided that the motor vehicle is autonomously operated. By the autonomous operation of the motor vehicle, the motor vehicle travels independently to a specified destination without necessity of intervention by the driver.

Preferably, it is provided that a change into the rest mode is proposed to the driver by outputting a fatigue notice if the degree of fatigue is larger than a fatigue limit value. If the degree of fatigue in particular after continuous observation of the driver exceeds the fatigue limit value at a certain point of time and thus the degree of fatigue is larger than the fatigue limit value, the fatigue notice is preferably output. The fatigue notice can for example be visually and/or acoustically and/or haptically output in particular by the motor vehicle. Thus, the fatigue notice can for example be displayed to the driver on a display unit of the motor vehicle. Now, the driver can consider whether he wants to change to the rest mode due to this fatigue notice to relax. Thereby, the motor vehicle can again be more safely operated. Therein, the fatigue limit value can for example be set such that upon reaching the fatigue limit value, an imminent negative impairment of the vehicle drive by the driver can be assumed.

Furthermore, it can preferably be provided that the change to the rest mode is performed if the change proposed by outputting the fatigue notice is approved in particular by the driver. Thus, the change from the normal mode into the rest mode is preferably performed if the output fatigue notice is approved by the driver. Therein, the driver can for example output an acoustic and/or haptic approval. Additionally or alternatively, the approval for the change into the rest mode can also be automatically performed by the motor vehicle. If the degree of fatigue falls below the fatigue limit value such that it can no longer be assumed that the driver is able to safely drive the motor vehicle. Thus, the rest mode can also be forced without the express agreement of the driver, wherein in this context in particular the change into the automatic drive operation of the motor vehicle is also performed. Thereby, the motor vehicle can be more safely operated.

In a further embodiment, it is preferably provided that in the rest mode as the parameter characterizing the function of the motor vehicle component, a drive characteristic of the motor vehicle is varied, in particular the motor vehicle is operated with less lane changes and/or with a lower, in particular lateral and/or longitudinal acceleration, compared to the normal mode. Thus, the motor vehicle is to be operated with the drive characteristic varied due to the rest mode such that the driver is assisted in his rest state. Thus, severe accelerations are for example known to be sensed as not pleasant during a rest state. Furthermore, the drive characteristic of the motor vehicle is characterized in that the acceleration of the motor vehicle is carried out in less erratic manner as it is the case in the normal mode. Preferably, lane changes of the motor vehicle are only performed if they are absolutely required. The motor vehicle can be more comfortably operated for the driver with the varied drive characteristic. Furthermore, the motor vehicle can thereby also be more safely operated, and the driver can relax in the rest mode without having to worry about the safety of the motor vehicle.

In a further embodiment, it is preferably provided that in the rest mode as the parameter characterizing the function of the motor vehicle component, an interior atmosphere of the motor vehicle is varied, in particular a brightness of a display unit of the motor vehicle is reduced and/or a brightness of an interior lighting of the motor vehicle is reduced and/or a tint of the interior lighting is varied and/or an opacity of at least one pane of the motor vehicle is increased.

By varying the interior atmosphere in the rest mode, an interior of the motor vehicle is in particular optically adapted such that the driver is assisted in his rest state. Thus, lightings with loud colors and/or high brightness, as they are for example present in the normal mode, are for example avoided. Thus, the brightness of the display unit of the motor vehicle can for example be reduced. The display unit can for example be formed as an instrument display such as for example a speed indicator or a rotary speed indicator of a main drive engine of the motor vehicle or else be formed as a navigation device display and/or radio device display. Furthermore, the brightness of the interior lighting can be reduced in the rest mode. A luggage rack lighting such as for example a glove box lighting can for example also be encompassed by the interior lighting. Thus, the driver is for example not disturbed in his rest state if a further vehicle occupant of the motor vehicle opens the glove box.

The interior lighting can also be varied with respect to the tint. Thus, the tint can for example be varied towards darker colors in the rest mode. Thus, a white tint can for example be modified to a dark red or dark blue tint. In particular at daylight or with light incidence from the outside of the motor vehicle, it is preferably provided that the opacity of at least one pane of the motor vehicle is increased. Thereby, the light incidence from the outside of the motor vehicle can be reduced compared to the normal mode and the rest state of the driver is assisted. Thus, with darkness in the interior of the motor vehicle, the rest state of the driver is more insistently assisted than if the pane of the motor vehicle is present with a high degree of transparency as for example in the normal mode. By the varied interior atmosphere in the rest mode, the driver can more comfortably experience his rest state and faster recover from the fatigue. The manual operation of the motor vehicle by the driver possibly following after the rest mode can thereby be more safely effected.

In a further embodiment, it is preferably provided that in the rest mode as the parameter characterizing the function of the motor vehicle component, background noise of the motor vehicle is varied, in particular a volume of sound outputs of the motor vehicle is reduced and/or an output of acoustic warning notices is reduced and/or at least a volume of a mobile apparatus in particular wirelessly connected to the motor vehicle is reduced. By reducing the background noise in the rest mode, in particular, an acoustic impairment of the driver in the rest mode is reduced compared to the normal mode. The background noise in the interior of the motor vehicle is therefore preferably varied such that the driver is assisted in his rest state. In particular, loud and/or crude sounds as they for example occur in the normal mode are suppressed during the rest mode. Thus, it can for example also be that in this case for further vehicle occupants in the motor vehicle, it is switched from output of a sound via a speaker of the motor vehicle to output of the sound via headphones connected to the motor vehicle. During the rest mode, the volume of sound outputs is for example also reduced. The sound outputs can for example be output by an infotainment system and/or a warning system of the motor vehicle. Additionally or alternatively, the volume of an apparatus connected to the motor vehicle in mobile manner can also be reduced. Therein, the apparatus connected to the motor vehicle can for example be changed into a mute mode. The apparatus connected to the motor vehicle can for example be formed as a cell phone and/or smart watch. Thereby, the driver can again more comfortably experience his rest state.

In a further embodiment, it is preferably provided that in the rest mode as the parameter characterizing the function of the motor vehicle component, a physical environment of the driver is varied, in particular a position of a seat of the motor vehicle provided for the driver is varied and/or an inclination of the seat is varied and/or a heating of the seat is activated and/or a massage mode of the seat is activated and/or a temperature in the interior of the motor vehicle is varied and/or an oxygen content in the interior is varied and/or a diffuse air supply for the interior is activated. By varying the physical environment in the rest mode, an atmosphere pleasant with respect to physical contacts and thus assisting the rest state is provided to the driver in the interior of the motor vehicle. Thus, the position of the seat can be adapted by for example moving the seat further rearwards, thus moving it farther away from a dashboard of the motor vehicle to increase the legroom of the driver. Additionally or alternatively, the inclination of the seat can also be varied such that the driver can for example assume a more horizontal posture for the rest state in the rest mode. It can also be provided that the heating of the seat is activated to prevent cooling of the driver during the rest state. In addition, the provision of a blanket can be proposed to the driver for example via an acoustic and/or a visual output. Thus, the current storage location of the blanket can for example also be indicated such that the driver does not have to go in search for the blanket. However, it can also be that the temperature in the interior is adapted for example according to whether or not the driver is covered. Thus, it can for example be that the temperature is decreased if the driver is covered. Furthermore, it can be that the temperature in the interior is increased if the driver is not covered to prevent cooling of the driver during the rest state. Furthermore, additionally or alternatively, the oxygen content in the interior can for example also be varied. Thus, the oxygen content can for example be increased to form the rest state of the driver more restful and comfortable. Furthermore, a flow direction of the air supply for the interior can also be varied. Thus, the air supply can for example be diffusely performed. With the diffuse air supply, the driver is preferably not directly hit by the airflow generated by the air supply. The adaptation of the physical environment of the driver is advantageous in that the driver thereby can rest more comfortable and faster regenerates in the rest mode than this is the case in the normal mode of the motor vehicle.

Furthermore, it can be provided that the state describing the degree of fatigue of the driver is determined by means of a camera system of the motor vehicle formed as the state monitoring device, by which in particular at least one eye of the driver is captured. Thus, the camera system can for example include at least one camera disposed in the interior of the motor vehicle. However, the camera system can also include multiple cameras. However, the camera system can for example also include glasses configured with a camera, which are in particular worn by the driver and are formed for capturing at least one eye of the driver. For example, the glasses can then be in particular wirelessly coupled to the motor vehicle. By the camera system, a lid movement and/or a pupil movement of the eye of the driver can for example then be captured. The lid movement and/or the pupil movement can then for example be evaluated by an evaluation unit of the camera system with respect to the degree of fatigue of the driver. It is advantageous that the state monitoring device can simply and precisely determine the degree of fatigue of the driver by the camera system. Moreover, the glasses can be an independent driver monitoring system on their own or connected to the camera system, including an environmental area camera which looks at the forward direction of the motor vehicle and/or sensors targeting the user's eyes, in particular for measuring metrics as eyelid opening or gaze direction, and/or electrodes for electroencephalography (EEC) functionalities and/or sensors for heart rate measuring.

Furthermore, it can be provided that the state describing the degree of fatigue of the driver is determined by means of a pulse measuring unit and/or an electroencephalography unit and/or a cardiac frequency measuring unit formed as the state monitoring device. Thus, a pulse of the driver and/or a cardiac frequency of the driver can for example be in particular continuously determined to infer the degree of fatigue of the driver from it. By the electroencephalography unit, electrical activity of a brain of the driver can be determined. Thus, the electroencephalography unit is a method of medical diagnostic for measuring the summed electrical activity of the brain by recording the voltage variations on a head surface of the driver. The pulse measuring unit and/or the cardiac frequency measuring unit can for example be formed as a wristwatch and/or as a fitness bracelet. For the electroencephalography unit, for example, electrodes can be attached to the head of the driver. It is advantageous that the degree of fatigue of the driver can thereby be more variously and precisely determined.

In particular, it is provided that the motor vehicle is operated in the rest mode and a gentle wake-up mode is activated for terminating the rest mode, in which the parameter characterizing the function of the motor vehicle component is in particular stepwise varied towards the setting present in the normal mode. By the gentle wake-up mode, the driver can for example be stepwise woken up. Thus, the function of the motor vehicle component is for example stepwise varied to effect gentle wake-up of the driver from the rest state. For example, the brightness of an interior lighting can be stepwise increased to form the wake-up of the driver from the rest state in more pleasant and natural manner. Thus, by stepwise increasing the brightness of the interior lighting, daybreak can for example be simulated. It is advantageous that higher comfort is provided for the driver at the end of his rest state by the gentle wake-up mode.

Preferably, it is provided that a travel time up to a current destination of the motor vehicle is determined and the gentle wake-up mode is automatically activated if the remaining travel time is less than a remaining travel time limit value. Thus, the gentle wake-up mode can for example be activated as far before reaching the destination as the driver has then finally completely woken up upon reaching the destination and is no longer sleepy. Therein, the remaining travel time limit value can for example be set by the driver himself with respect to his individual preferences. The remaining travel time can for example be determined by means of a navigation unit of the motor vehicle. By activating the gentle wake-up mode depending on the remaining travel time, the rest state of the driver can be maintained until reaching the remaining travel time limit value. Thus, the travel time in the motor vehicle can thereby be more effectively utilized.

In particular, it is furthermore provided that during the rest mode, a sleep state of the driver is monitored and the gentle wake-up mode is automatically activated depending on the sleep state. Thus, the circadian cycle of the driver can be taken into account by the gentle wake-up mode. The sleep state can for example include various sleep phases of the driver. Thus, it can for example be provided that the driver is woken up by the gentle wake-up mode during a light sleep phase, in particular not during a deep sleep phase. Thereby, various sleep stages experienced by the driver during the rest state of the driver can be determined in order to wake up the driver at a time as pleasant to him as possible. Thus, awaking from the rest state comes more naturally to the driver during the light sleep phase than it is for example the case if he is extracted from a deep sleep phase. The sleep state of the driver can for example also be determined by the state monitoring device. In particular, the sleep state is determined by the pulse measuring unit and/or the electroencephalography unit and/or the cardiac frequency measuring unit. The activation time of the gentle wake-up mode can for example be performed depending on the sleep state and the remaining travel time. Thus, the sleep state can for example also be matched to the remaining travel time to activate the gentle wake-up mode if the driver can be easily woken up, yet is to be woken up before the arrival at the current destination. Thereby, the sleep comfort of the driver can be further increased.

The invention also relates to a driver assistance system for a motor vehicle. The driver assistance system includes a state monitoring device and an evaluation unit. The driver assistance system is adapted to perform a method according to the invention.

Therein, the state monitoring device can for example include a camera system and/or a pulse measuring unit and/or an electroencephalography unit and/or a cardiac frequency measuring unit. Thus, the state monitoring device can be variously formed to be able to more reliably and precisely determine the state of the driver. The evaluation unit can for example be integrated in the state monitoring device or else be present as a separate unit thereto.

The invention also relates to a motor vehicle with a driver assistance system according to the invention.

Below, the embodiments of the invention are explained in more detail based on schematic drawings.

There show:
- Fig. 1: a schematic plan view of an embodiment of a motor vehicle according to the invention with a driver assistance system; and
- Fig. 2: a schematic side view of the motor vehicle with the driver assistance system.

In the figures, identical or functionally identical elements are provided with the same reference characters.

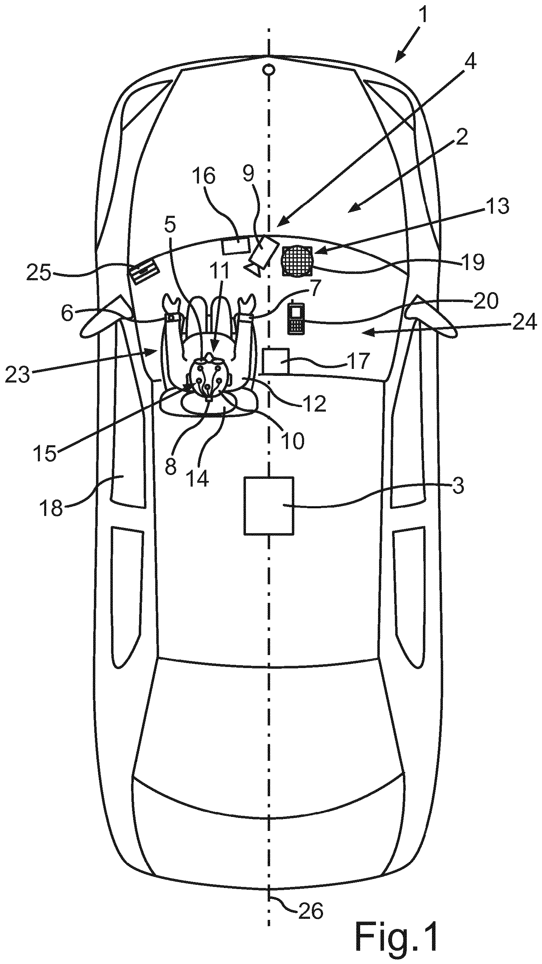

In Fig. 1, a motor vehicle 1 with a driver assistance system 2 is schematically illustrated. The driver assistance system 2 has an evaluation unit 3. Furthermore, the driver assistance system 2 has a camera system 4 formed as a state monitoring device. However, additionally or alternatively, the driver assistance system 2 also has glasses 5 coupled to the motor vehicle 1 and/or a watch 6 coupled to the motor vehicle 1 and/or a fitness bracelet 7 coupled to the motor vehicle 1 and/or an electroencephalography unit 8 as the state monitoring device. The camera system 4 includes a camera 9 according to the embodiment, by which in particular a head 10 and/or an eye 11 of a driver 12 of the motor vehicle 1 can be captured.

By the state monitoring device 4, 5, 6, 7, 8, 9, a state of the driver 12 describing a degree of fatigue of the driver 12 is determined. Based on the degree of fatigue of the driver 12, it can be inferred how tired the driver 12 currently is.

The evaluation unit 3 can for example be disposed integrated in the camera system 4 or else separately thereto in any position in the motor vehicle 1. The camera 9 of the camera system 4 is for example disposed on a center console 13 of the motor vehicle 1. The camera 9 is oriented such that the head 10 and/or the eye 11 can be captured during normal orientation of the driver 12 in a seat 14 of the motor vehicle 1. The camera system 4 can also include multiple cameras. By multiple cameras, the driver 12 can for example be captured from different directions. The glasses 5 are worn by the driver 12 according to the embodiment. However, the glasses 5 can also for example be worn by another occupant of the motor vehicle 1, who looks at the driver 12 therewith. The glasses 5 are wirelessly coupled to the motor vehicle 1, whereby information can be transmitted from the glasses to the motor vehicle 1 and from the motor vehicle 1 to the glasses 5. Therein, the glasses 5 can be formed as smart glasses, which include at least one camera. The watch 6 is worn by the driver 12 at a wrist. The watch 6 can for example be formed as a smart watch and thus as a pulse measuring unit and/or a cardiac frequency measuring unit. Thus, for example a pulse and/or a cardiac frequency of the driver 12 can be determined by the smart watch 6. The fitness bracelet 7 is also worn by the driver 12 at the wrist. Therein, the fitness bracelet 7 can for example also be formed as a pulse measuring unit and/or as a cardiac frequency measuring unit. Thus, the pulse and/or the cardiac frequency of the driver 12 can also be determined by the fitness bracelet 7. The electroencephalography unit 8 is disposed with electrodes 15 on the head 10 of the driver 12 according to the embodiment. The watch 6, the fitness bracelet 7 and the electroencephalography unit 8 are wirelessly coupled to the motor vehicle 1 such that information can be transmitted towards the motor vehicle 1 and back.

For example, the camera 9 can be formed as an infrared camera. Thereby, the state of the driver 12 can for example be determined based on a cornea reflection of the eye 11 of the driver 12.

In the method, it is now provided that the state describing the degree of fatigue of the driver 12 is determined by means of the state monitoring device 4, 5, 6, 7, 8, 9. Depending on the degree of fatigue, the motor vehicle 1 can be operated in a normal mode and in a rest mode different therefrom. In the rest mode, a parameter characterizing the function of a motor vehicle component of the motor vehicle 1 is varied with respect to the function perception sensed by the driver 12. Thus, in the rest mode, for example, as the parameter characterizing the function of the motor vehicle component, a drive characteristic of the motor vehicle 1 and/or an interior atmosphere of the motor vehicle 1 and/or background noise of the motor vehicle 1 can be varied. In varying the drive characteristic of the motor vehicle 1, the motor vehicle 1 is operated with less lane changes and/or with a lower lateral and/or longitudinal acceleration compared to the normal mode. In varying the interior atmosphere, for example, a brightness of a display unit 16 is reduced and/or a brightness of an interior lighting 17 is reduced, a tint of the interior lighting 17 is varied and/or an opacity of a pane 18 of the motor vehicle 1 is increased. The interior atmosphere of the motor vehicle 1 is thus varied in the rest mode such that a rest state of the driver 12 is assisted.

In varying the background noise of the motor vehicle 1 in the rest mode, for example, a volume of a sound output from a speaker 19 of the motor vehicle 1 is reduced and/or an output of acoustic warning notices is reduced with respect to its number and/or a volume of a mobile apparatus 20 is reduced. Therein, the mobile apparatus 20 can for example be wirelessly coupled to the motor vehicle 1. Thus, the mobile apparatus 20 can for example be muted by the driver assistance system 2. The mobile apparatus 20 can for example be formed as a cell phone, tablet or notebook.

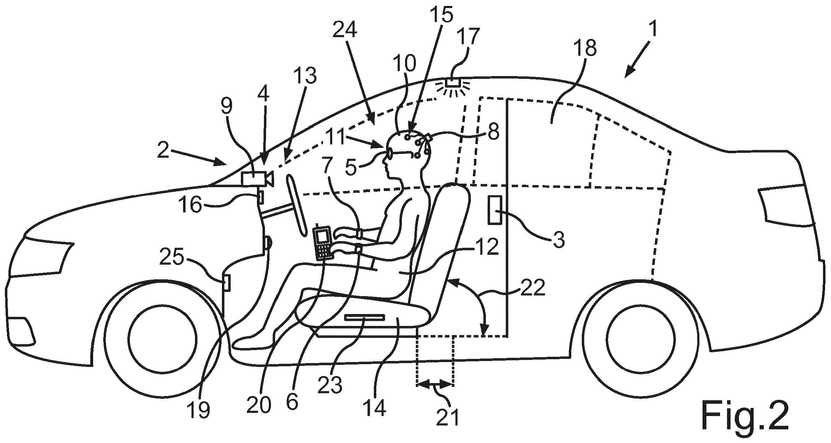

Furthermore, as the parameter characterizing the function of the motor vehicle component, a physical environment of the driver 12 can be varied in the rest mode. As the physical environment of the driver 12, for example - as shown in Fig. 2 - a position 21 of the seat 14 and/or an inclination 22 of the seat 14 can be varied and/or a heating 23 of the seat 14 can be activated and/or a massage mode of the seat 14 can be activated and/or a temperature in an interior 24 of the motor vehicle 1 can be varied and/or an oxygen content in the interior 24 can be varied and/or a diffuse air supply, for example through an air supply opening 25, for the interior 24 can be activated.

By varying the position 21, the seat 14 can for example be moved back and forth with respect to a longitudinal axis 26 of the motor vehicle 1. Thus, legroom of the driver 12 can for example be increased during the rest mode. By the inclination 22, the seat 14 can for example be varied from an erected seat position of the driver 12 into a shallower seat position, in which the driver 12 is rather oriented lying than seating on the seat 14.

Fig. 2 shows the motor vehicle 1 with the driver assistance system 2 in analogous manner to Fig. 1 in a side view.

Now, an embodiment of the method proceeds as follows. By means of the state monitoring device 4, 5, 6, 7, 8, 9, the state of the driver 12 is determined with respect to the degree of fatigue of the driver 12. If the degree of fatigue is larger than a fatigue limit value, a change from the normal mode of the motor vehicle 1 into the rest mode of the motor vehicle 1 is proposed to the driver 12 by outputting a fatigue notice. If the driver 12 approves the fatigue notice, thus, the motor vehicle 1 changes to the rest mode.

In the rest mode, the parameter characterizing the function of the motor vehicle component is adapted such that a rest state of the driver 12 is assisted. This is effected, as already mentioned, by varying the drive characteristic and/or the interior atmosphere and/or the background noise and/or the physical environment.

In a further embodiment, the driver 12 can manually activate the rest mode himself even if the rest mode is not proposed by the fatigue notice, because the degree of fatigue is for example not yet larger than the fatigue limit value at this time.

If the rest mode is active and the driver 12 is in the rest state or sleeps, thus, it is provided according to an embodiment that the driver 12 is transferred from the rest state into an attentive wake state by a gentle wake-up mode. By the gentle wake-up mode, the parameter characterizing the function of the motor vehicle component is stepwise varied up to the setting present in the normal mode. Thus, the driver 12 is slowly prepared to the normal mode. The time for activating the gentle wake-up mode can for example be determined depending on a remaining travel time up to a current travel destination of the motor vehicle 1. Thus, the gentle wake-up mode can be activated if the remaining travel time is less than a remaining travel time limit value. Furthermore, the gentle wake-up mode can be activated depending on a sleep state of the driver 12. The sleep state of the driver can for example also be determined by means of the state monitoring device 4, 5, 6, 7, 8, 9. The sleep state for example includes the various sleep stages of the driver 12. Thus, the gentle wake-up mode is preferably activated in presence of a light sleep as the preferred sleep stage. By the gentle wake-up mode, the circadian cycle of the driver 12 can be taken into account.

After terminating the rest mode, in particular by the gentle wake-up mode, the motor vehicle 1 is then preferably again operated in the normal mode. The parameter characterizing the function of the motor vehicle component is then in particular varied to the setting in the normal mode - if not already occurred by the gentle wake-up mode.

## Claims

1. Method for operating a motor vehicle (1), in which a state describing a degree of fatigue of a driver (12) of the motor vehicle (1) is determined by means of a state monitoring device (4, 5, 6, 7, 8, 9),
wherein
a motor vehicle component (14, 16, 17, 18, 19, 20, 25) of the motor vehicle (1) can be operated in a normal mode and in a rest mode different therefrom depending on the state,
said motor vehicle (1) being autonomously operated and travelling independently to a specified destination without necessity of intervention by said driver (12), and in the rest mode a parameter characterizing the function of the motor vehicle component (14, 16, 17, 18, 19, 20, 25) is varied with respect to the function perception sensed by the driver (12) towards a value supporting a rest state of the driver.

2. Method according to claim 1,
**characterized in that**
a change into the rest mode is proposed to the driver (12) by outputting a fatigue notice if the state describes a degree of fatigue larger than a fatigue limit value.

3. Method according to claim 2,
**characterized in that**
the change into the rest mode is performed if the change proposed by outputting the fatigue notice is approved.

4. Method according to any one of the preceding claims,
**characterized in that**
in the rest mode as the parameter characterizing the function of the motor vehicle component (14, 16, 17, 18, 19, 20, 25), a drive characteristic of the motor vehicle (1) is varied, in particular the motor vehicle (1) is operated with less lane changes and/or with a lower acceleration compared to the normal mode.

5. Method according to any one of the preceding claims,
**characterized in that**
in the rest mode as the parameter characterizing the function of the motor vehicle component (14, 16, 17, 18, 19, 20, 25), an interior atmosphere of the motor vehicle (1) is varied, in particular a brightness of a display unit (16) of the motor vehicle (1) is reduced and/or a brightness of an interior lighting (17) of the motor vehicle (1) is reduced and/or a tint of the interior lighting (17) is varied and/or an opacity of at least one pane (18) of the motor vehicle (1) is increased.

6. Method according to any one of the preceding claims,
**characterized in that**
in the rest mode as the parameter characterizing the function of the motor vehicle component (14, 16, 17, 18, 19, 20, 25), background noise of the motor vehicle (1) is varied, in particular a volume of sound outputs of the motor vehicle (1) is reduced and/or an output of acoustic warning notices is reduced and/or at least a volume of a mobile apparatus (20) connected to the motor vehicle (1) is reduced.

7. Method according to any one of the preceding claims,
**characterized in that**
in the rest mode as the parameter characterizing the function of the motor vehicle component (14, 16, 17, 18, 19, 20, 25), a physical environment of the driver (12) is varied, in particular a position (21) of a seat (14) of the motor vehicle (1) provided for the driver (12) is varied and/or an inclination (22) of the seat (14) is varied and/or a heating (23) of the seat (14) is activated and/or a massage mode of the seat (14) is activated and/or a temperature in an interior (24) of the motor vehicle (1) is varied and/or an oxygen content in the interior (24) is varied and/or a diffuse air supply for the interior (24) is activated.

8. Method according to any one of the preceding claims,
**characterized in that**
the state describing the degree of fatigue of the driver (12) is determined by means of a camera system (4) of the motor vehicle (1) formed as the state monitoring device, by which in particular at least one eye (11) of the driver (12) is captured.

9. Method according to any one of the preceding claims,
**characterized in that**
the state describing the degree of fatigue of the driver (12) is determined by means of a pulse measuring unit (6, 7) and/or an electroencephalography unit (8) and/or a cardiac frequency measuring unit (6, 7) formed as the state monitoring device.

10. Method according to any one of the preceding claims,
**characterized in that**
the motor vehicle (1) is operated in the rest mode, and for terminating the rest mode, a gentle wake-up mode is activated, in which the parameter characterizing the function of the motor vehicle component (14, 16, 17, 18, 19, 20, 25) is in particular stepwise varied towards the setting present in the normal mode.

11. Method according to claim 10,
**characterized in that**
a remaining travel time up to a current destination of the motor vehicle (1) is determined and the gentle wake-up mode is automatically activated if the remaining travel time is less than a remaining travel time limit value.

12. Method according to claim 10 or 11,
**characterized in that**
during the rest mode, a sleep state of the driver (12) is monitored, and the gentle wake-up mode is automatically activated depending on the sleep state.

13. Driver assistance system (2) for a motor vehicle (1) including a state monitoring device (4, 5, 6, 7, 8, 9) and an evaluation unit (3), which is configured to perform a method according to any one of the preceding claims.

14. Motor vehicle (1) with a driver assistance system (2) according to claim 13.

## Patentansprüche

1. Verfahren zum Betreiben eines Kraftfahrzeugs (1), bei dem mittels einer Zustandsüberwachungsvorrichtung (4, 5, 6, 7, 8, 9) ein einen Ermüdungsgrad eines Fahrers (12) des Kraftfahrzeugs (1) beschreibender Zustand bestimmt wird,
wobei eine Kraftfahrzeugkomponente (14, 16, 17, 18, 19, 20, 25) des Kraftfahrzeugs (1) in einem Normalmodus und in einem dazu verschiedenen Ruhemodus abhängig vom Zustand betrieben werden kann, wobei das Kraftfahrzeug (1) autonom betrieben wird und ohne die Notwendigkeit eines Eingriffs des Fahrers (12) selbstständig zu einem vorgegebenen Ziel fährt, und wobei im Ruhemodus ein die Funktion der Kraftfahrzeugkomponente (14, 16, 17, 18, 19, 20, 25) kennzeichnender Parameter gegenüber der vom Fahrer (12) empfundenen Funktionswahrnehmung hin zu einem Wert verändert wird, der einen Ruhezustand des Fahrers unterstützt.

2. Verfahren nach Anspruch 1,
**dadurch gekennzeichnet, dass**
dem Fahrer (12) ein Wechsel in den Ruhemodus durch Ausgeben eines Ermüdungshinweises vorgeschlagen wird, wenn der Zustand einen Ermüdungsgrad beschreibt, der größer als ein Ermüdungsgrenzwert ist.

3. Verfahren nach Anspruch 2,
**dadurch gekennzeichnet, dass**
der Wechsel in den Ruhezustand durchgeführt wird, wenn der durch das Ausgeben des Ermüdungshinweises vorgeschlagene Wechsel zugelassen wird.

4. Verfahren nach einem der vorhergehenden Ansprüche,
**dadurch gekennzeichnet, dass**
im Ruhemodus als der die Funktion der Kraftfahrzeugkomponente (14, 16, 17, 18, 19, 20, 25) kennzeichnende Parameter eine Fahrcharakteristik des Kraftfahrzeugs (1) verändert wird, insbesondere das Kraftfahrzeug (1) mit weniger Spurwechseln und/oder mit einer geringeren Beschleunigung gegenüber dem Normalmodus betrieben wird.

5. Verfahren nach einem der vorhergehenden Ansprüche,
**dadurch gekennzeichnet, dass**
im Ruhemodus als der die Funktion der Kraftfahrzeugkomponente (14, 16, 17, 18, 19, 20, 25) kennzeichnende Parameter eine Innenraumatmosphäre des Kraftfahrzeugs (1) verändert wird, insbesondere eine Helligkeit einer Anzeigeeinheit (16) des Kraftfahrzeugs (1) reduziert wird und/oder eine Helligkeit einer Innenraumbeleuchtung (17) des Kraftfahrzeugs (1) reduziert wird und/oder eine Tönung der Innenraumbeleuchtung (17) verändert wird und/oder eine Opazität wenigstens einer Scheibe (18) des Kraftfahrzeugs (1) erhöht wird.

6. Verfahren nach einem der vorhergehenden Ansprüche,
**dadurch gekennzeichnet, dass**
im Ruhemodus als der die Funktion der Kraftfahrzeugkomponente (14, 16, 17, 18, 19, 20, 25) kennzeichnende Parameter Hintergrundgeräusch des Kraftfahrzeugs (1) verändert wird, insbesondere eine Lautstärke von Tonausgaben des Kraftfahrzeugs (1) reduziert wird und/oder eine Ausgabe von akustischen Warnhinweisen reduziert wird und/oder zumindest eine Lautstärke eines mit dem Kraftfahrzeug (1) verbundenen mobilen Geräts (20) reduziert wird.

7. Verfahren nach einem der vorhergehenden Ansprüche,
**dadurch gekennzeichnet, dass**
im Ruhemodus als der die Funktion der Kraftfahrzeugkomponente (14, 16, 17, 18, 19, 20, 25) kennzeichnende Parameter eine physische Umgebung des Fahrers (12) verändert wird, insbesondere eine Position (21) eines für den Fahrer (12) bereitgestellten Sitzes (14) des Kraftfahrzeugs (1) verändert wird und/oder eine Neigung (22) des Sitzes (14) verändert wird und/oder eine Heizung (23) des Sitzes (14) aktiviert wird und/oder ein Massagemodus des Sitzes (14) aktiviert wird und/oder eine Temperatur in einem Innenraum (24) des Kraftfahrzeugs (1) verändert wird und/oder ein Sauerstoffgehalt im Innenraum (24) verändert wird und/oder eine diffuse Luftzufuhr für den Innenraum (24) aktiviert wird.

8. Verfahren nach einem der vorhergehenden Ansprüche,
**dadurch gekennzeichnet, dass**
der den Ermüdungsgrad des Fahrers (12) beschreibende Zustand mittels eines als die Zustandsüberwachungsvorrichtung ausgebildeten Kamerasystems (4) des Kraftfahrzeugs (1) bestimmt wird, mit dem insbesondere mindestens ein Auge (11) des Fahrers (12) erfasst wird.

9. Verfahren nach einem der vorhergehenden Ansprüche,
**dadurch gekennzeichnet, dass**
der den Ermüdungsgrad des Fahrers (12) beschreibende Zustand mittels einer Pulsmesseinheit (6, 7) und/oder einer Elektroenzephalographieeinheit (8) und/oder einer Herzfrequenzmesseinheit (6, 7), die als die Zustandsüberwachungsvorrichtung ausgebildet sind, bestimmt wird.

10. Verfahren nach einem der vorhergehenden Ansprüche,
**dadurch gekennzeichnet, dass**
das Kraftfahrzeug (1) im Ruhemodus betrieben wird und zum Beenden des Ruhemodus ein sanfter Aufwachmodus aktiviert wird, in dem der die Funktion der Kraftfahrzeugkomponente (14, 16, 17, 18, 19, 20, 25) kennzeichnende Parameter insbesondere schrittweise in Richtung der im Normalmodus vorliegenden Einstellung verändert wird.

11. Verfahren nach Anspruch 10,
**dadurch gekennzeichnet, dass**
eine Restfahrzeit bis zu einem aktuellen Ziel des Kraftfahrzeugs (1) bestimmt wird und der sanfte Aufwachmodus automatisch aktiviert wird, wenn die Restfahrzeit kleiner als ein Restfahrzeit-Grenzwert ist.

12. Verfahren nach Anspruch 10 oder 11,
**dadurch gekennzeichnet, dass**
während des Ruhemodus ein Schlafzustand des Fahrers (12) überwacht wird und der sanfte Aufwachmodus in Abhängigkeit vom Schlafzustand automatisch aktiviert wird.

13. Fahrerassistenzsystem (2) für ein Kraftfahrzeug (1), beinhaltend eine Zustandsüberwachungsvorrichtung (4, 5, 6, 7, 8, 9) und eine Auswerteeinheit (3), die zum Durchführen eines Verfahrens nach einem der vorhergehenden Ansprüche ausgelegt ist.

14. Kraftfahrzeug (1) mit einem Fahrerassistenzsystem (2) nach Anspruch 13.

## Revendications

1. Procédé de conduite d'un véhicule motorisé (1), selon lequel un état décrivant un niveau de fatigue d'un conducteur (12) du véhicule motorisé (1) est déterminé au moyen d'un dispositif de surveillance d'état (4, 5, 6, 7, 8, 9),
un composant (14, 16, 17, 18, 19, 20, 25) de véhicule motorisé du véhicule motorisé (1) étant utilisable dans un mode normal et dans un mode de repos différent de celui-ci en fonction de l'état, ledit véhicule motorisé (1) étant conduit de manière autonome et roulant indépendamment jusqu'à une destination spécifiée sans nécessiter l'intervention dudit conducteur (12) et, dans le mode de repos, un paramètre caractérisant la fonction du composant (14, 16, 17, 18, 19, 20, 25) de véhicule motorisé étant modifié à l'égard de la perception de la fonction ressentie par le conducteur (12) vers une valeur favorisant un état de repos du conducteur.

2. Procédé selon la revendication 1,
**caractérisé en ce que**
un passage au mode de repos est suggéré au conducteur (12) par la génération d'une notification de fatigue si l'état décrit un niveau de fatigue dépassant une valeur limite de fatigue.

3. Procédé selon la revendication 2,
**caractérisé en ce que**
le passage au mode de repos s'effectue si le passage suggéré par la génération de la notification de fatigue est accepté.

4. Procédé selon l'une quelconque des revendications précédentes,
**caractérisé en ce que**
dans le mode de repos, à titre de paramètre caractérisant la fonction du composant (14, 16, 17, 18, 19, 20, 25) de véhicule motorisé, une caractéristique de conduite du véhicule motorisé (1) est modifiée, plus particulièrement le véhicule motorisé (1) est conduit avec moins de changements de file et/ou avec une moindre accélération par rapport au mode normal.

5. Procédé selon l'une quelconque des revendications précédentes,
**caractérisé en ce que**
dans le mode de repos, à titre de paramètre caractérisant la fonction du composant (14, 16, 17, 18, 19, 20, 25) de véhicule motorisé, une ambiance intérieure du véhicule motorisé (1) est modifiée, plus particulièrement une luminosité d'une unité d'affichage (16) du véhicule motorisé (1) est réduite et/ou une luminosité d'un éclairage intérieur (17) du véhicule motorisé (1) est réduite et/ou une teinte de l'éclairage intérieur (17) est modifiée et/ou une opacité d'au moins une vitre (18) du véhicule motorisé (1) est accrue.

6. Procédé selon l'une quelconque des revendications précédentes,
**caractérisé en ce que**
dans le mode de repos, à titre de paramètre caractérisant la fonction du composant (14, 16, 17, 18, 19, 20, 25) de véhicule motorisé, un bruit de fond du véhicule motorisé (1) est modifié, plus particulièrement un volume de sorties sonores du véhicule motorisé (1) est réduit et/ou une sortie de notifications d'avertissement acoustiques est réduite et/ou au moins un volume d'un appareil mobile (20) connecté au véhicule motorisé (1) est réduit.

7. Procédé selon l'une quelconque des revendications précédentes,
**caractérisé en ce que**
dans le mode de repos, à titre de paramètre caractérisant la fonction du composant (14, 16, 17, 18, 19, 20, 25) de véhicule motorisé, un environnement physique du conducteur (12) est modifié, plus particulièrement une position (21) d'un siège (14) du véhicule motorisé (1) prévu pour le conducteur (12) est modifiée et/ou une inclinaison (22) du siège (14) est modifiée et/ou un chauffage (23) du siège (14) est activé et/ou un mode de massage du siège (14) est activé et/ou une température dans un habitacle (24) du véhicule motorisé (1) est modifiée et/ou une teneur en oxygène dans l'habitacle (24) est modifiée et/ou une distribution diffuse d'air pour l'habitacle (24) est activée.

8. Procédé selon l'une quelconque des revendications précédentes,
**caractérisé en ce que**
l'état décrivant le niveau de fatigue du conducteur (12) est déterminé au moyen d'un système (4) de caméra(s) du véhicule motorisé (1) constituant le dispositif de surveillance d'état, permettant, plus particulièrement, de capturer au moins un œil (11) du conducteur (12).

9. Procédé selon l'une quelconque des revendications précédentes,
**caractérisé en ce que**
l'état décrivant le niveau de fatigue du conducteur (12) est déterminé au moyen d'une unité de mesure du pouls (6, 7) et/ou d'une unité d'électroencéphalographie (8) et/ou d'une unité de mesure de la fréquence cardiaque (6, 7) constituant le dispositif de surveillance d'état.

10. Procédé selon l'une quelconque des revendications précédentes,
**caractérisé en ce que**
le véhicule motorisé (1) est conduit dans le mode de repos et, pour mettre fin au mode de repos, un mode de réveil en douceur est activé, dans lequel le paramètre caractérisant la fonction du composant (14, 16, 17, 18, 19, 20, 25) de véhicule motorisé est plus particulièrement modifié par paliers vers le réglage présent dans le mode normal.

11. Procédé selon la revendication 10,
**caractérisé en ce que**
un temps de parcours restant jusqu'à une destination actuelle du véhicule motorisé (1) est déterminé et le mode de réveil en douceur est activé automatiquement si le temps de parcours restant est inférieur à une valeur limite de temps de parcours restant.

12. Procédé selon la revendication 10 ou 11,
**caractérisé en ce que**
durant le mode de repos, un état de sommeil du conducteur (12) est surveillé, et le mode de réveil en douceur est activé automatiquement en fonction de l'état de sommeil.

13. Système (2) d'assistance à la conduite pour un véhicule motorisé (1) comportant un dispositif de surveillance d'état (4, 5, 6, 7, 8, 9) et une unité d'évaluation (3), configuré pour réaliser un procédé selon l'une quelconque des revendications précédentes.

14. Véhicule motorisé (1) doté d'un système (2) d'assistance à la conduite selon la revendication 13.
